(19) **Europäisches Patentamt / European Patent Office / Office européen des brevets**

(11) **EP 1 607 316 B1**

(12) **EUROPEAN PATENT SPECIFICATION**

(45) Date of publication and mention
of the grant of the patent:
**07.11.2007 Bulletin 2007/45**

(21) Application number: **04712762.6**

(22) Date of filing: **19.02.2004**

(51) Int Cl.:
***B62D 55/116*** (2006.01)

(86) International application number:
**PCT/JP2004/001937**

(87) International publication number:
**WO 2004/076267 (10.09.2004 Gazette 2004/37)**

(54) **COMBINE**

MÄHDRESCHER

COMBINE

(84) Designated Contracting States:
**FR IT**

(30) Priority: **28.02.2003 JP 2003053242**

(43) Date of publication of application:
**21.12.2005 Bulletin 2005/51**

(73) Proprietor: **Yanmar Co., Ltd.**
**Osaka-shi, Osaka 530-0013 (JP)**

(72) Inventors:
• **MIZUKURA, Yoshiharu c/o YANMAR CO., LTD.**
**Osaka-shi, Osaka 530-013 (JP)**
• **NAKAGAWA, Wataru c/o YANMAR CO., LTD.**
**Osaka-shi, Osaka 530-013 (JP)**

• **HAYASHI, Akiyoshi c/o YANMAR CO., LTD.**
**Osaka-shi, Osaka 530-0013 (JP)**

(74) Representative: **Jostarndt, Hans-Dieter**
**Jostarndt Patentanwalts-AG**
**Brüsseler Ring 51**
**52074 Aachen (DE)**

(56) References cited:
**JP-A- 11 289 849        JP-A- 2001 206 259**

• **PATENT ABSTRACTS OF JAPAN vol. 2003, no. 01, 14 January 2003 (2003-01-14) & JP 2002 272243 A (KUBOTA CORP), 24 September 2002 (2002-09-24)**

**Description**

**Technical Field**

The present invention relates to a combine comprising: vehicle body tilt angle detection means for detecting a tilt angle of a vehicle body of the combine; and rolling drive means, to perform rolling control for substantially leveling a vehicle body attitude with respect to a base level. More specifically, the invention relates to a technology for improving a combine in accuracy of attitude-control and travel stability during turning travel of the combine.

A combine according to the preamble of claim 1 is described in JP 2002 272 243 A.

**Background Art**

Conventionally, there is a well-known combine comprising: vehicle body tilt angle detection means, e.g., a tilt sensor, for detecting a tilt angle of a vehicle body of the combine; and rolling drive means for changing the lateral tilt angle of the vehicle body with respect to an imaginary plane connecting between grounding parts of left and right crawlers. When the imaginary plane connecting between the grounding parts of left and right crawlers is inclined from a base level, the rolling drive means is actuated for rolling control, i.e., to keep the vehicle body substantially parallel or at a certain set angle with respect to the base level (a surface which is substantially perpendicular to the gravitational direction). Japanese Utility Model No. 2566454 discloses an example of such combines.

The combine disclosed in Japanese Utility Model No. 2566454 has a tilt sensor for detecting the vehicle body attitude (the lateral tilt angle). A typical tilt sensor has a hermetical casing filled with liquid whose level variation during tilt of the vehicle is converted into capacitance variation to be measured as the tilt angle. If the traveling combine is steered, centrifugal force is applied onto the liquid in the tilt sensor, so as to cause difference of the detection value from an actual tilt angle of the vehicle body. Accordingly, a problem arises that, during turning of the vehicle, the attitude-control based on the detection value of the tilt sensor cannot keep the vehicle body substantially parallel or at a certain set angle with respect to the base level.

Therefore, a conventional combine temporally cancels the attitude-control during turning of the combine so as to maintain the tilt angle of the vehicle body relative to the crawler travel unit before start of the turning, and resumes the attitude-control after the completion of turning.

However, if a combine is attitude-controlled in this way, the attitude-control is canceled during turning of the combine essentially requiring the attitude-control for stabilizing the turning travel, thereby causing a problem that when the turning is completed, the amount of rolling actuation for substantially leveling the vehicle body may have to be very large so as to reduce the reaction of attitude-control. Especially, if the turning combine moves from a wet field to a dry field, it may be difficult for the combine, which has held at the tilt angle relative to the crawler travel unit set on the wet field just before the turning, to start reaping immediately after completion of the turning on the dry field.

To solve the problem, the present invention is intended to provide a combine which can be attitude-controlled for excellently stable travel during turning of the combine.

**Summary of the Invention**

According to the present invention, a combine comprises: vehicle body tilt angle detection means for detecting a tilt angle of a vehicle body of the combine; and rolling drive means, to perform rolling control for controlling an attitude of the vehicle body substantially parallel or at a certain set tilt angle with respect to a base level. The combine calculates a centrifugal force applied onto the vehicle body based on travel speeds of left and right crawlers during turning thereof, and amends a detection valve of the vehicle body tilt angle detection means deviated by the centrifugal force so as to perform the rolling control based of the amended value. Therefore, even while the traveling combine turns, the rolling control is performed accurately so as to improve the stability of the combine during turning travel and to improve the reaction control in correspondence to inclination of a field after completion of turning.

Further, according to the present invention, the vehicle body tilt angle detection means is disposed so as to substantially coincide with a turning center point of the vehicle body in the fore-and-aft direction of the combine. Accordingly, a detection value of the vehicle body tilt angle detection means is prevented from being undershot and overshot, so as to improve the accuracy of the attitude-control of the vehicle body, thereby preventing the reaction of the attitude-control from delaying. Therefore, even while the traveling combine turns, the rolling control is performed accurately so as to improve the stability of the combine during turning travel and to improve the reaction control in correspondence to inclination of a field after completion of turning.

Further, according to the present invention, the vehicle body tilt angle detection means is disposed forward from the turning center point of the vehicle body with respect to the vehicle body. Accordingly, the reaction of the attitude-control of the vehicle body is prevented from delaying. Therefore, even while the traveling combine turns, the rolling control is performed accurately so as to improve the stability of the combine during turning travel and to improve the reaction control in correspondence to inclination of a field after completion of turning.

Additionally, according to the present invention, the combine is provided with crawler slip detection means, and the detection value of the vehicle body tilt angle detection means is amended based on a detection value of the crawler slip detection means. Accordingly, even if a crawler of the combine slips, the vehicle body is prevented from being excessively frequently attitude-controlled. Therefore, the combine can turn with a stable attitude of the vehicle body thereof. Further, at the time of completion of turning of the combine, the vehicle body can be easily leveled substantially parallel to the base level, so that the combine can start reaping immediately after the completion of the turning.

## Brief Description of the Drawings

Fig. 1 is a left side view of a combine according to an embodiment of the present invention.
Fig. 2 is a plan view of the combine according to the embodiment of the present invention.
Fig. 3 is a right side view of the combine according to the embodiment of the present invention.
Fig. 4 is a front view of the combine according to the embodiment of the present invention.
Fig. 5 is a side view of a crawler travel unit.
Fig. 6 is a side view of the crawler travel unit when its full height is increased.
Fig. 7 is a schematic plan view of the combine when it turns left.
Fig. 8 is a schematic sectional view of a tilt sensor.
Fig. 9 is a block diagram of a controller.
Fig. 10 is a flow chart of a first pattern of attitude control process for a combine according to the present invention.
Fig. 11 is a flow chart of a second pattern of attitude control process for a combine according to the present invention.
Fig. 12 graphs a relation among curves of an amended tilt angle $\theta_T$, a detection value $\theta_M$ of vehicle body tilt angle detection means, and a measurement deviation $\theta_E$ caused by centrifugal force, during turning of the combine.
Fig. 13 is a diagram of locus of the vehicle body tilt angle detection means disposed at a center point of the vehicle body, during turning of the combine.
Fig. 14 graphs a curve of detection value $\theta_M$ of vehicle body tilt angle detection means disposed at the center point, during turning of the combine.
Fig. 15 is a diagram of locus of the vehicle body tilt angle detection means disposed rearward from the center point of the vehicle body with respect to the vehicle body, during turning of the combine.
Fig. 16 graphs a curve of detection value $\theta_M$ of vehicle body tilt angle detection means disposed rearward from the center point of the vehicle body with respect to the vehicle body, during turning of the combine.
Fig. 17 is a diagram of locus of the vehicle body tilt angle detection means disposed forward from the center point of the vehicle body with respect to the vehicle body, during turning of the combine.
Fig. 18 graphs a curve of detection value $\theta_M$ of vehicle body tilt angle detection means disposed forward from the center point of the vehicle body with respect to the vehicle body, during turning of the combine.

## Best Mode for Carrying out the Invention

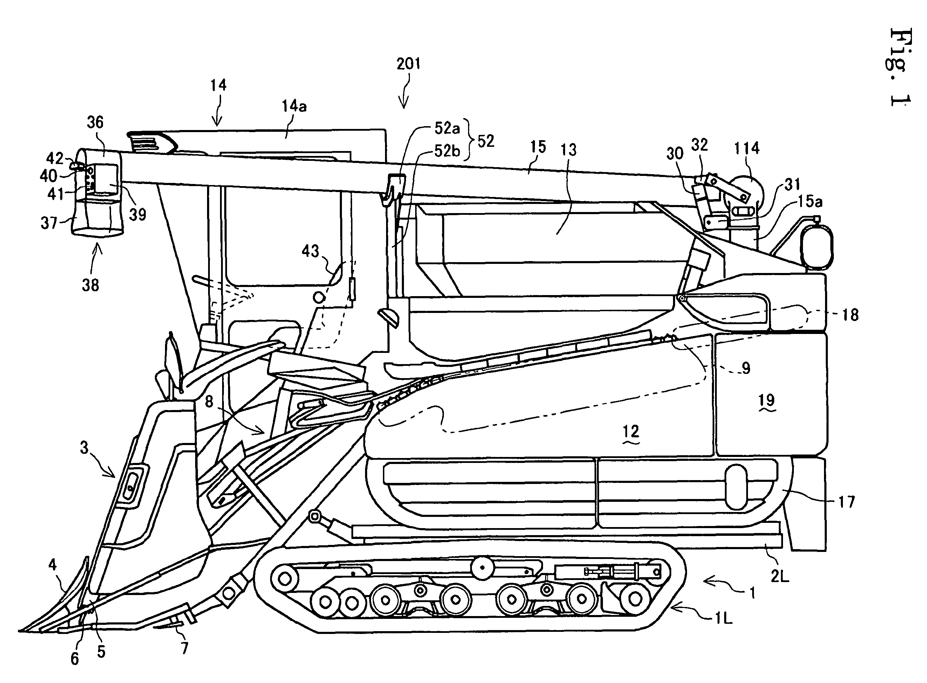

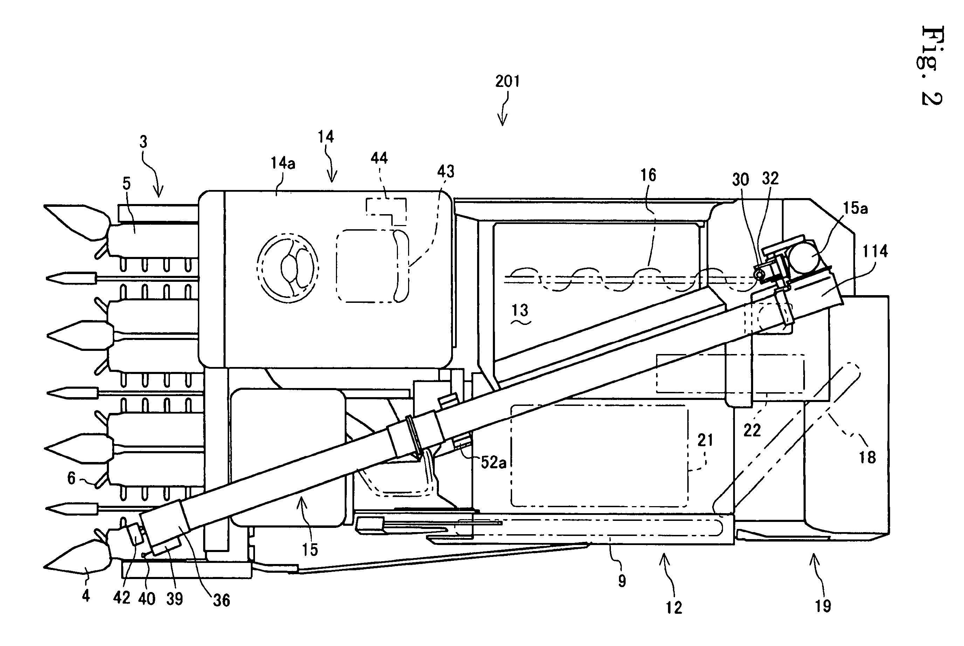

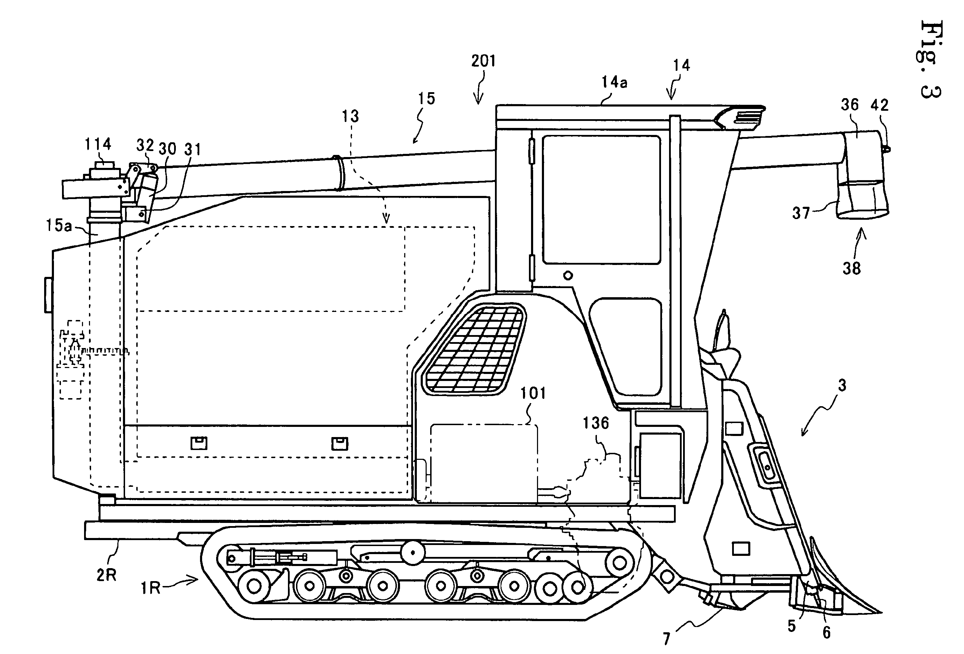

A combine 201 as an embodiment of the present invention will be described with reference to Figs. 1 to 4.
The present invention is not limited to combine 201 of the present embodiment. The present invention can be adapted to any combine if it comprises detection means for detecting a tilt angle of a vehicle body and rolling drive means such as to perform rolling control for controlling the vehicle body attitude substantially parallel or at a certain set tilt angle with respect to a base level. Thus, the present invention is broadly applicable to combines whether they are general-purpose combine or head-feeding combines.
In combine 201 of this embodiment, vehicle body frames 2L and 2R are mounted on a crawler type travel unit 1 having left and right crawlers 1L and 1R.
A raising-and-reaping unit 3 is vertically movably provided on front ends of vehicle body frames 2L and 2R. Raising-and-reaping unit 3 is provided at the front end thereof with divider plates 4 projecting for dividing cereal plants, and with a raising casing 5 and a cutter bar 7 behind divider plates 4. Raising casing 5, from which tines 6 project, stands behind divider plates 4 so as to raise the cereal plants by rotating tines 6. Cutter bar 7 behind divider plates 4 cuts feet of the cereal plants. The reaped cereal rods are conveyed rearward by upper and lower conveyers and an ascending conveyer 8. Then, the feet of the cereal rods are transferred from a top end of ascending conveyer 8 to a feed chain 9 so as to transfer the cereal rods into a threshing unit 12. A straw chain 18 is disposed at a rear end portion of threshing unit 12, and a straw processing unit 19 including a straw cutter and a spreading conveyer is disposed under a rear portion of straw chain 18 so as to cut straws into chips and evenly spread the chips over a field.

A grain tank 13 for storing sorted grains is disposed on a side of threshing unit 12. A driver's cab 14 is disposed in front of grain tank 13. An elevation auger 15a of a discharge auger 15 is disposed upright behind grain tank 13. Grain tank 13 is rotatable sideward centered on elevation auger 15a so as to facilitate maintenance of drive systems and hydraulic systems in the vehicle body.

Discharge conveyor 16 is disposed in the fore-and-aft direction at a bottom portion of grain tank 13. Power is transmitted from discharge conveyor 16 to discharge auger 15 so as to convey grains from grain tank 13 and discharge out the grains from a tip of discharge auger 15 to a truck or the like. A sorting unit 17 is disposed below threshing unit 12 so as to select grains from grains and chaffs dropped from threshing unit 12, and to convey the grains to grain tank 13.

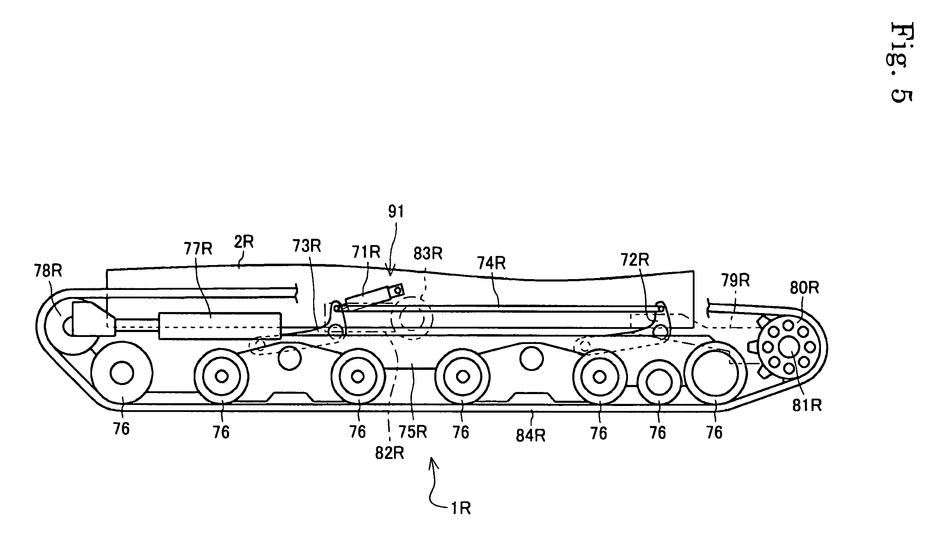

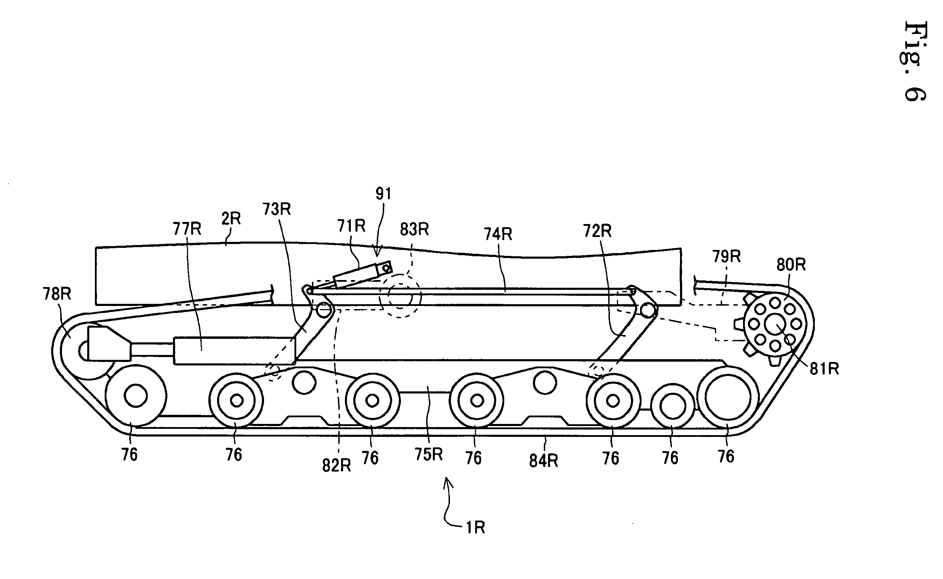

Rolling drive means 91 will now be described with reference to Figs. 5 and 6.

The description will be given for only representative left crawler 1R, and description about left crawler 1L R will be omitted.

For right crawler 1R, rolling drive means 91 is provided with a lift actuator 71R, a front crank 72R, a rear crank 73R, a parallel linkage 74R, and the like.

Lift actuator 71R is made of a hydraulic cylinder or the like, which is pivoted at the cylinder side end thereof onto vehicle body frame 2R, and pivoted at the piston rod side end thereof onto one end of rear crank 73R.

Front crank 72R is a substantially L-like shaped member having a top end, onto which a front end of parallel linkage 74R is pivoted, a bent middle portion pivoted onto vehicle body frame 2R, and a bottom end pivoted onto a track frame 75R.

Rear crank 72R is a substantially L-like shaped member having a top end, onto which a rear end of parallel linkage 74R and the piston rod side end of lift actuator 71R are pivoted, a bent middle portion pivoted onto vehicle body frame 2R, and a bottom end pivoted onto a track frame 75R.

Rollers 76 are pivoted on track frame 75R. A tension sprocket 78R is pivotally supported via a tension actuator 77R (e.g., a hydraulic cylinder) onto a rear end of track frame 75R.

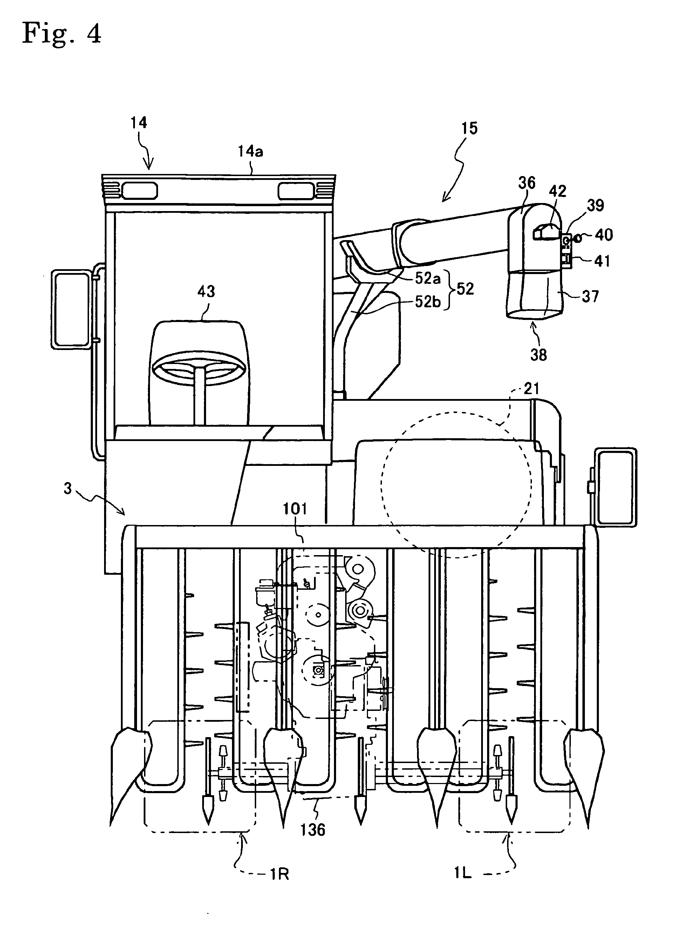

A support member 79R projects forward from vehicle body frame 2R so as to pivotally support a drive shaft 81R via a bearing, and a drive sprocket 80R is provided onto an outer end of drive shaft 81R. As shown in Fig. 4, drive shaft 81R transmits power from an engine 101 via a travel transmission casing 139 to crawler 1R.

A support member 82R is fixed on an intermediate portion of a side surface of vehicle body frame 2R, and an upper idle roller 83R is pivoted on support member 82R. A crawler 84R is looped over drive sprocket 80R, upper idle roller 83R, tension sprocket 78R and idle rollers 76.

When lift actuator 71R is extended, rear crank 73R is rotated so as to downwardly move the bottom portion thereof, and front crank 72R connected to rear crank 73R via parallel linkage 74R is also rotated so as to downwardly move the bottom portion thereof. Accordingly, track frame 75R is rotated downward relative to vehicle frame 2R so as to increase the full height of crawler 1R.

In this regard, tension actuator 77R is telescoped in the fore-and-aft direction in correspondence to the telescopic actuation of left actuator 71R so as to keep the tension of crawler belt 84R substantially constant regardless of variation of the full height of crawler 1R.

In this way, crawler travel unit 1 has left and right crawlers 1L and 1R whose heights can be individually changed with respect to the vehicle body of combine 201 by rolling drive means 91. For instance, if combine 201 is placed on a leftward descending slope, the full height of left crawler 1L is increased to be larger than that of right crawler 1R so as to level the vehicle body attitude of combine 201 substantially parallel to the base level.

Further, the heights of left and right crawlers 1L and 1R can be adjusted while being kept substantially equal to each other, so as to adjust the ground clearance of combine 201.

The present embodiment does not restrict configuration of the rolling drive means. Alternatively, laterally rotatable and vertically movable rolling drive means may be disposed on a coupling portion between the crawler travel unit and the vehicle body of the combine.

Description will now be given on a process of attitude-control of the vehicle body, a process of calculation of centrifugal force applied onto the vehicle body, and a process of amendment of a detection value of the tilt sensor, which are employed by combine 201 according to the present invention.

In the present embodiment, either the rolling control or return control is selected in correspondence to the condition where combine 201 is used, thereby performing the attitude-control for improvement of stability (against overturning) and working efficiency.

The rolling control is defined as a control such that, when an imaginary plane connecting between the grounding parts of left and right crawlers 1L and 1R is slant from the base level, rolling drive means 91 is actuated for keeping an attitude of the vehicle body substantially parallel or at a certain tilt angle with respect to the base level.

The return control is defined as a control such that an initial angle and an initial height of the vehicle body of combine 201 relative to crawlers 1L and 1R (where the full heights of the crawlers are normally small so as to lower the center of gravity) is preset, and rolling drive means 91 is actuated for returning the vehicle body to the initial angle and height.

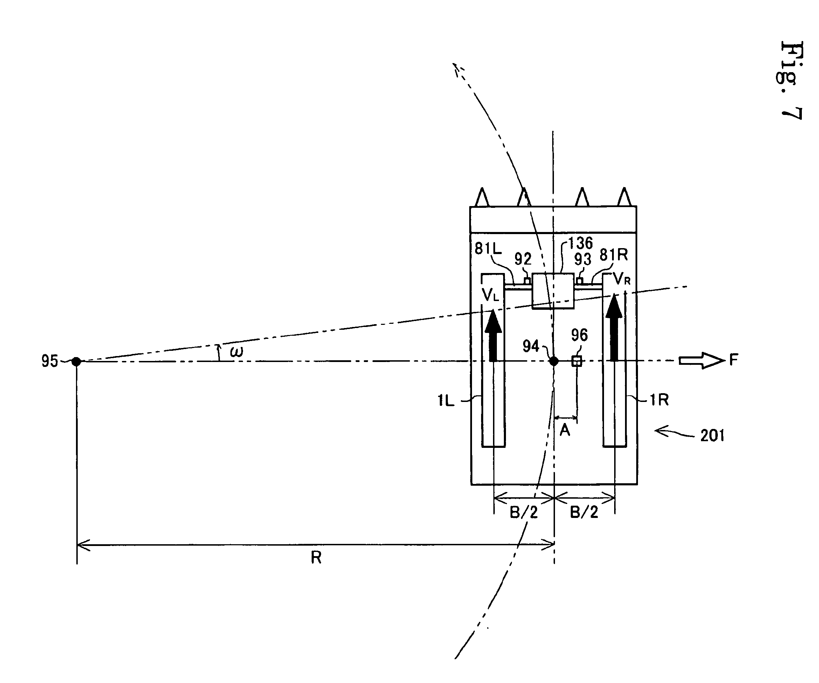

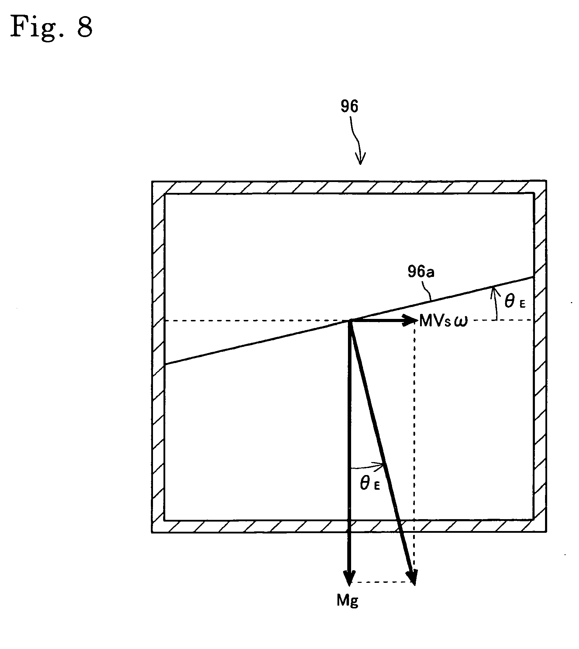

Referring to Figs. 7 to 9, the process of calculation of centrifugal force applied onto the vehicle body, and the process of amendment of a detection value of the tilt sensor will be described.

In this embodiment, tilt sensor 96 serves as vehicle body tilt angle detection means 88. Tilt sensor 96 has a hermetical casing filled with liquid, such that, when the vehicle body is tilt, variation of the liquid level is converted into capacitance variation to be detected as a tilt angle. However, other tilt sensors may have similar effect.

One of other tilt sensors having the same effect is a tilt sensor using a deadweight. (For example, it is a mechanical-contact tilt sensor incorporating a ball serving as the deadweight, i.e., a contactor; an optical tilt sensor incorporating a ball serving as the dead weight, a position of the ball being detected by a photo-interrupter; or a tilt sensor having a housing incorporating a magnet serving as the deadweight, position variation of the magnet causing variation of magnetic force to be detected by a Hall IC.) Alternatively, an acceleration sensor (such as a flat-spring type acceleration sensor having a flat spring whose strain by a deadweight receiving an acceleration force is detected by a strain gage, or a compression tilt sensor having a deadweight supported by piezoelectric element) can be used so as to bring the same effect.

Referring to Fig. 7, description will be given of the process in case where combine 201 traveling on a ground surface substantially parallel to the base level and turning left without tilt of the vehicle body relative to crawler travel unit 1.

A travel speed of left crawler 1L is referred to as a travel speed $V_L$, and a travel speed of right crawler 1R is referred to as a travel speed $V_R$. Left crawler speed detection means 92 detects travel speed $V_L$, and right crawler speed detection means 93 detects travel speed $V_R$.

Speed sensors such as tachometers serve as left and right crawler speed detection means 92 and 93 for detecting the respective travel speeds of left and right crawlers 1L and 1R.

Left and right crawler speed detection means 92 and 93 detect rotary speeds of drive shafts 81L and 81R of crawler travel unit 1 for driving left and right drive sprockets 80L and 80R, respectively, thereby measuring the respective travel speeds of left and right crawlers 1L and 1R. Alternative means may be used for detecting respective travel speeds of the left and right crawlers. The present embodiment does not restrict the detection means.

With respect to this embodiment, it is assumed for convenience of description that the turning center point of the vehicle body (substantially coinciding with the center of gravity of combine 201 during turning) to be used for determining the turning radius of combine 201 coincides with a center point 94 of the vehicle body, which is disposed at the center portion between left and right crawlers 1L and 1R in combine 201 in the left-and-right and fore-and-aft directions when viewed in plan.

"R[m]" designates a turning radius, i.e., a distance between the turning center of the vehicle body (in this embodiment, vehicle body center point 94) and a turning center point 95 which is an imaginary point deduced from a speed difference between left and right crawlers 1L and 1R of the combine). "B[m]" designates a distance between centerlines of left and right crawlers 1L and 1R. "ω[rad/sec]" designates an angular velocity of turning combine 201. Travel speed $V_L$ of left crawler 1L and travel speed $V_R$ of right crawler 1R are expressed by the following Formulae 1 and 2.

$$\text{Formula 1} \qquad V_L = (R-B/2)\,\omega$$

$$\text{Formula 2} \qquad V_R = (R+B/2)\,\omega$$

Distance B between the centerlines of crawlers 1L and 1R is an invariable. Thus, due to Formulae 1 and 2, angular velocity of combine 201 is expressed by the following Formula 3.

$$\text{Formula 3} \qquad \omega = (V_R - V_L)/B$$

Further, turning radius R is expressed by the following Formula 4.

$$\text{Formula 4} \qquad R = (B/2)\{(V_R+V_L)/(V_R-V_L)\}$$

Due to Formulae 3 and 4, R and ω can be calculated from travel speed $V_L$ of left crawler 1L detected by left crawler speed detection means 92 and travel speed $V_R$ of right crawler 1R detected by right crawler speed detection means 93.

When tilt sensor 96 serving as vehicle body tilt angle detection means 88 is disposed with a distance A[m] rightward from vehicle body center point 94 (the turning center point of the vehicle body), as shown in Fig. 7, a turning speed $V_S$ of tilt sensor 96 is expressed by the following Formula 5.

$$\text{Formula 5} \qquad V_S = (R+A)\,\omega$$

The deadweight in the tilt sensor (in this embodiment, liquid sealed in the hermetical casing of tilt sensor 96) is assumed to have a weight M[kg]. A centrifugal force F[N] applied onto the deadweight is expressed by the following Formula 6.

$$\text{Formula 6} \qquad F = MV_S\,\omega\ = M(R+A)\,\omega^{2}$$

In this way, the centrifugal force applied onto tilt sensor 96 during turning of the combine can be calculated.

The process of amendment of detection value of the tilt sensor will now be described.

It is assumed that a level 96a of liquid sealed in tilt sensor 96 is tilted at an angle $\theta_E$ [rad] from the base level (a tilt angle of the vehicle body tilted leftwardly downward is a positive value)

When the combine turns left while keeping the vehicle body substantially parallel to the base level, tilt angle $\theta_E$ expresses an ingredient of measurement deviation caused by the centrifugal force (hereinafter, $\theta_E$ is referred to as a tilt sensor amendment angle). A resultant vector of combination of centrifugal force F and gravitation force G(=Mg) perpendicularly crosses the liquid level. Thus, the following Formula 7 is realized.

$$\text{Formula 7} \qquad \tan\theta_E = F/G = (R+A)\,\omega^{2}/g$$

Here, "g" designates a gravitational acceleration (= 9.81 [m/sec$^2$]). Gravitational acceleration g and distance A of tilt sensor 96 from vehicle body center point 94 (the turning center point of the vehicle body) in the lateral direction of the combine are invariables. As mentioned above, R and $\omega$ can be calculated from travel speed $V_L$ of left crawler 1L detected by left crawler speed detection means 92 and travel speed $V_R$ of right crawler 1R detected by right crawler speed detection means 93. Namely, due to calculation of the travel speeds of the left and right crawlers, the measurement deviation of the tilt sensor in the turning combine can be calculated.

The following Formula 8 expresses an amended tilt angle $\theta_T$ of the vehicle body of the turning combine relative to the base level, which is calculated based on a detection tilt angle $\theta_M$ serving as a detection value of tilt sensor 96 and on an amended tilt sensor angle $\theta_E$ calculated by Formulae 1 to 7.

$$\text{Formula 8} \qquad \theta_T = \theta_M - \theta_E$$

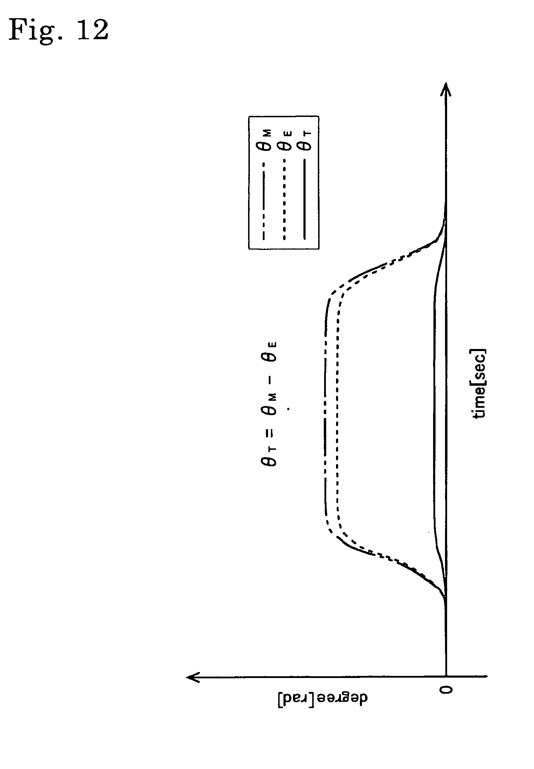

Fig. 12 is a correlation diagram of Formula 8, where the x-axis expresses passage of time [sec], and the y-axis expresses variation of angle [rad] (the rightwardly downward tilt direction about the vehicle body is assumed to be the positive direction).

In this way, even when the traveling combine turns, the detection value of vehicle body tilt angle detection means 88 (in this embodiment, tilt sensor 96) is amended so as to accurately calculate the actual tilt angle of the vehicle body with respect to the base level. Accordingly, even during turning of the combine, the rolling control is performed by use of amended tilt angle $\theta_T$ so as to keep the vehicle body substantially parallel or at a certain set tilt angle with respect to the base level. Consequently, the traveling combine can turn stably.

A controller 85 for performing the rolling control (attitude-control of the vehicle body) with the tilt angle amendment according to the present embodiment will now be described.

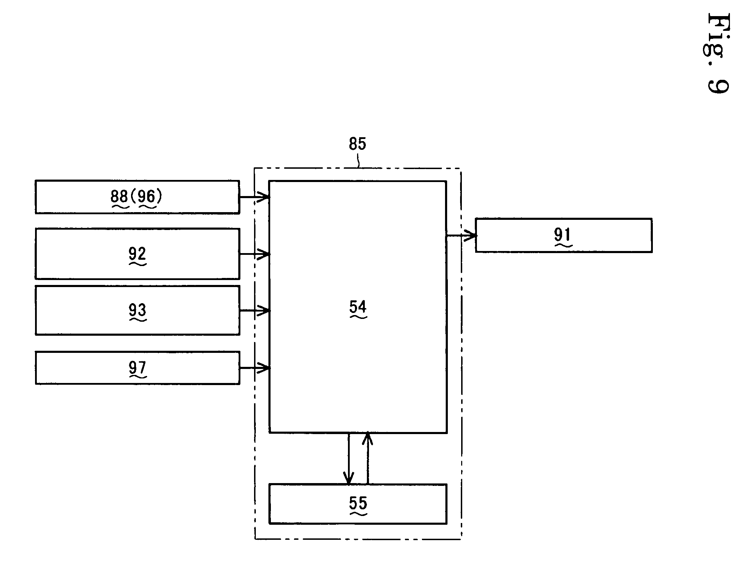

As shown in Fig. 9, controller 85 of a combine 203 according to the present invention mainly comprises a CPU 54 and a data storage section 55.

CPU 54 calculates values about the rolling control and the tilt angle amendment based on various input signals and various data stored in data storage section 55, and outputs various output signals.

Data storage section 55 stores various data about the rolling control and the tilt angle amendment, e.g., distance B[m] between the centerlines of left and right crawlers 1L and 1R, lateral distance A[m] of tilt sensor 96 from vehicle body center point 94 (the turning center of the vehicle body), gravitational acceleration g (=9.81[m/sec$^2$] ), and weight M of liquid sealed in the hermetical casing of tilt sensor 96.

In this embodiment, EEPROM (Electrically Erasable and Programmable Read Only Memory: a kind of nonvolatile semiconductor memory which is a read only memory that can be electrically written on) serves as data storage section 55. Alternatively, another type ROM, another storage media or so on can do so.

Vehicle body tilt angle detection means 88, left crawler speed detection means 92, right crawler detection means 93, straight travel detection means 97 and the like are provided to send input signals to controller 85.

Vehicle body tilt angle detection means 88 detects a tilt angle of a vehicle body of combine 203. In this embodiment, tilt sensor 96 and the like serve as it.

Left crawler speed detection means 92 detects a travel speed of left crawler 1L. A speed sensor such as a tachometer, or the like serves as it.

Right crawler speed detection means 93 detects a travel speed of right crawler 1R. A speed sensor such as a tachometer, or the like serves as it.

Straight travel detection means 97 detects straight travel condition of combine 201 (does not turn). More specifically, when a steering wheel is disposed in driver's cab 14 to serve as a steering operation device, a switch for detecting either leftward or rightward rotation of the steering wheel from the neutral position may serve as straight travel detection means 97. Instead of the straight travel detection means, a detection value indicating actuation of an HST for steering of the combine (actuation of a solenoid valve for supplying oil to the steering HST) may be sent to CPU 54.

Alternatively, when the steering operation device is an almighty steering device consisting of a single lever which is tiltable in the fore-and-aft direction for operating raising-and-reaping unit 3, in the lateral direction for operating clutches and brakes of the left and right crawlers, or if the steering operation device consists of two left and right side clutch levers for respective left and right clutches and brakes, a switch for detecting rotation of the lever or levers beyond a threshold angle, or for detecting switch-on of a fit steering switch may serve as the straight travel detection means.

Rolling drive means 91 is provided to receive an output signal from controller 85.

As mentioned above, rolling drive means 91 comprises lift actuator 71R, front crank 72R, rear crank 73R, parallel linkage 74R and the like. In this embodiment, rolling drive means 91 individually changes heights of left and right crawlers 1L and 1R relative to the vehicle body of combine 201 so as to change the lateral tilt angle of the vehicle body with respect to the imaginary plane connecting between the grounding parts of left and right crawlers 1L and 1R, thereby keeping the vehicle body substantially parallel or at a certain set tilt angle with respect to the base level.

Controller 85 may be integrated with a control device for other portions (such as the threshing unit and the sorting unit) of the combine, or may be separated from it.

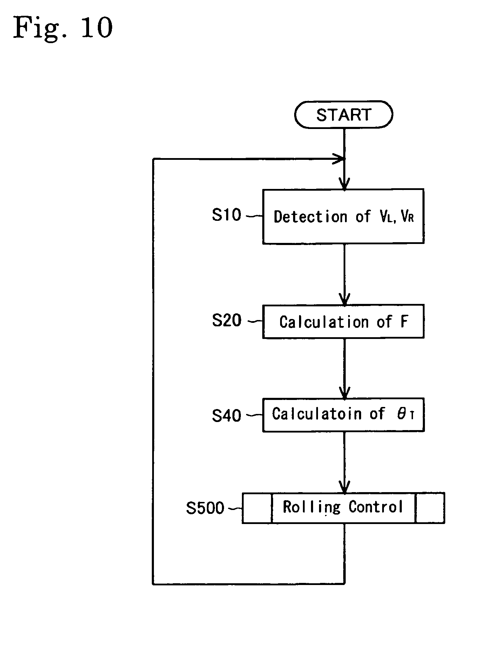

Referring to Fig. 10, a first pattern of the attitude-control of the vehicle body with amendment for deviation of tilt angle measurement caused by the centrifugal force will be described.

For an initial condition, controller 85 detects start of turning of combine 201 according to the data given by straight travel detection means 97, and detects no abnormality of tilt sensor 96 and left and right crawler speed detection means 92 and 93. After the initial condition is confirmed, controller 85 starts the first pattern of vehicle body attitude control process with amendment for tilt angle measurement deviation caused by the centrifugal force (i.e., the process is proceeded to a step S10).

At step S10, controller 85 gets data about travel speeds of left and right crawlers 1L and 1R, and then proceeds the process to a step S20.

More specifically, left and right crawler speed detection means 92 and 93 detect respective travel speeds $V_L$ and $V_R$ of left and right crawlers 1L and 1R, and send data about them to CPU 54 of controller 85.

After getting the data about travel speeds of left and right crawlers 1L and 1R at step S10, controller 85 calculates centrifugal force F applied onto vehicle body tilt angle detection means 88 (in this embodiment, tilt sensor 96), and then proceeds the process to a step S40.

More specifically, CPU 54 of controller 85 calculates travel speed $V_L$ of left crawler 1L and travel speed $V_R$ of right crawler 1R based the data about the speeds of left and right crawlers 1L and 1R get at step S10. Next, CPU 54 calculates centrifugal force F[N] by use of above-mentioned Formulae 1 to 6 based on calculated $V_L$ and $V_R$ and preset values stored in data storage section 55. The preset values are distance B[m] between the centerlines of left and right crawlers 1L and 1R, lateral distance A[m] between the position of tilt sensor 96 and vehicle body center point 94 (turning center point of the vehicle body), and weight M[kg] of liquid sealed in hermetical casing of tilt sensor 96.

After calculating the centrifugal force applied onto vehicle body tilt angle detection means 88 (in this embodiment, tilt sensor 96) at step S20, controller 85 amends the detection value of vehicle body tilt angle detection means 88, and then proceeds the process to a step S500.

More specifically, CPU 54 of controller 85 calculates amended tilt angle $\theta_T$ by use of the above-mentioned Formulae 7 and 8 based on detected tilt angle $\theta_M$, which has been calculated based on the data from vehicle body tilt angle detection means 88, and on preset values stored in data storage section 55. The present values are weight M[kg] of liquid sealed in hermetical casing of tilt sensor 96, and gravitational acceleration g (= 9.81 [m/sec$^2$]).

After amending the detection value of vehicle body tilt angle detection means 88 at step S40, controller 85 performs the rolling control at step S500. Then, the process backs to step S10.

More specifically, controller 85 actuates rolling drive means 91 so as to roll the vehicle body in a direction for canceling amended tilt angle $\theta_T$ calculated at step S40 (opposite to the tilt direction of the vehicle body), so that, after the rolling control, the vehicle body attitude is disposed substantially parallel or at a certain set tilt angle with respect to the base level.

Further, an actual angle of the vehicle body rolled by rolling drive means 91 for canceling amended tilt angle $\theta_T$ is designated as ($\theta_T \cdot$k/100)[rad]. "k"[%] is a tilt-amendment magnification which is larger than 0 and not larger than 100. Normally, "k" is 100[%]. Tilt-amendment magnification k is a preset value stored in data storage section 55. However, if some condition of a field on which combine 201 is used existents or the weight of harvest stored in grain tank 13 becomes some value, the rolling control with the setting "k = 100" (for rolling the vehicle body at an angle equal to amended tilt angle $\theta_T$ in the opposite direction to the tilt direction of the vehicle body) may cause unsettled laterally reciprocal rolling (hunting) of the vehicle body every rolling control, or result in that the vehicle body is tilted in the opposite to the original tilt direction because of excessive amendment, or that the rolled vehicle body attitude cannot reach the substantially level position because of insufficient amendment. When such a condition existents, preset tilt-amendment magnification k is changed (0<k<100).

In this way, even during turning travel of the combine, the rolling control can be accurately performed so as to keep the vehicle body attitude substantially parallel or at a set tilt angle with respect to the base level, thereby improving the travel stability during turning, and improving the reaction of rolling control in correspondence to inclination of a field after completion of the turning.

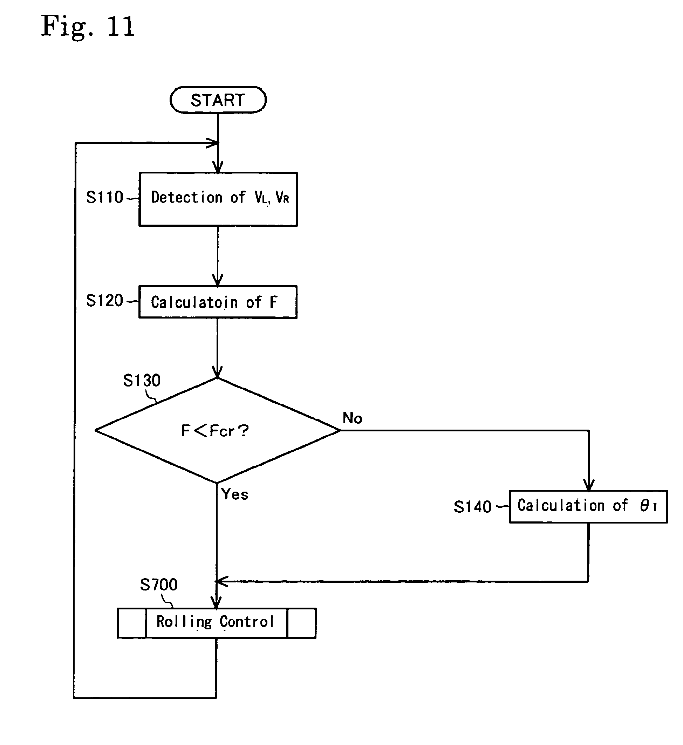

Referring to Fig. 11, a second pattern of the attitude-control of the vehicle body with amendment for deviation of tilt angle measurement caused by the centrifugal force will be described.

For an initial condition, controller 85 detects start of turning of combine 201 according to the data given by straight travel detection means 97, and detects no abnormality of tilt sensor 96 and left and right crawler speed detection means 92 and 93. After the initial condition is confirmed, controller 85 starts the second pattern of vehicle body attitude control process with amendment for tilt angle measurement deviation caused by the centrifugal force (i.e., the process is proceeded to a step S110).

At step S 110, controller 85 gets data about travel speeds of left and right crawlers 1L and 1R, and then proceeds the process to a step S120.

More specifically, left and right crawler speed detection means 92 and 93 detect respective travel speeds $V_L$ and $V_R$ of left and right crawlers 1L and 1R, and send data about them to CPU 54 of controller 85.

After getting the data about travel speeds of left and right crawlers 1L and 1R at step S110, controller 85 calculates centrifugal force applied onto vehicle body tilt angle detection means 88 (in this embodiment, tilt sensor 96), and then proceeds the process to a step S130.

More specifically, CPU 54 of controller 85 calculates travel speed $V_L$ of left crawler 1L and travel speed $V_R$ of right crawler 1R based the data about the speeds of left and right crawlers 1L and 1R get at step S110. Next, CPU 54 calculates centrifugal force F[N] by use of above-mentioned Formulae 1 to 6 based on calculated $V_L$ and $V_R$ and preset values stored in data storage section 55. The preset values are distance B[m] between the centerlines of left and right crawlers 1L and 1R, lateral distance A[m] between the position of tilt sensor 96 and vehicle body center point 94 (turning center point of the vehicle body), and weight M[kg] of liquid sealed in hermetical casing of tilt sensor 96.

After calculating centrifugal force F applied onto vehicle body tilt angle detection means 88 (in this embodiment, tilt sensor 96) at step S120, controller 85 judges at step S 130 whether or not calculated centrifugal force F is larger than a preset threshold Fcr.

If controller 85 judges at step S130 so that centrifugal force F is equal to threshold Fcr or exceeds threshold Fcr, controller 85 sets a control tilt angle $\theta_C$ to be $\theta_M$, and then proceeds the process to a step S140. If controller 85 judges at step S130 so that centrifugal force F is smaller than threshold Fcr, controller 85 sets control tilt angle $\theta_C$ to be $\theta_M$, and then proceeds the process to a step S700.

More specifically, CPU 54 of controller 85 compares centrifugal force F calculated at step S120 with the preset threshold (which results from experiments or the like) stored in data storage section 55.

The situation that centrifugal force F is smaller than threshold Fcr means that measurement deviation (i.e., $\theta_E$) caused by the centrifugal applied onto vehicle body tilt angle detection means 88 (tilt sensor 96) is negligibly small because travel speed of the turning vehicle body (expressed as an average of $V_L$ and $V_R$) is small, or because turning radius R is large. Therefore, control tilt angle $\theta_C$ equaling $\theta_T$ is supposed to be nearly equal to $\theta_M$.

If controller 85 judges at step S130 so that centrifugal force F is equal to or exceeds threshold Fcr, controller 85 amends the detection value of vehicle body tilt angle detection means 88 at step S140, and proceeds the process to step S700.

More specifically, CPU 54 of controller 85 calculates amended tilt angle $\theta_T$ by use of the above-mentioned Formulae 7 and 8 based on detected tilt angle $\theta_M$, which has been calculated based on the data from vehicle body tilt angle detection means 88, and preset values stored in data storage section 55. The present values are weight M[kg] of liquid sealed in hermetical casing of tilt sensor 96, and gravitational acceleration g (= 9.81 [m/sec$^2$]). Then, control tilt angle $\theta_C$ equaling $\theta_T$ is set to be $\theta_M$ - 0 $_E$.

After controller 85 judges at step S 130 so that centrifugal force F is smaller than threshold Fcr, or after controller 85 amends the detection value of vehicle body tilt angle detection means 88 at step S 140, controller 85 performs the rolling control at step S700, and backs the process to step S110.

More specifically, controller 85 actuates rolling drive means 91 so as to roll the vehicle body in a direction for canceling control tilt angle $\theta_C$, which has been calculated in the case where controller 85 judges at step S130 so that centrifugal force F is smaller than threshold Fcr, or calculated at step S140 (opposite to the tilt direction of the vehicle body). Therefore, after the rolling control, the vehicle body attitude is disposed substantially parallel or at a certain set tilt angle with respect to the base level.

Further, an actual angle of the vehicle body rolled by rolling drive means 91 for canceling control tilt angle $\theta_C$ is designated as ($\theta_C$· k/100)[rad]. "k"[%] is a tilt-amendment magnification which is larger than 0 and not larger than 100. Normally, "k" is 100[%]. Tilt-amendment magnification k is a preset value stored in data storage section 55.

However, due to some field condition on which combine 201 is used or some weight of harvest stored in grain tank 13, the rolling control with the setting "k = 100" (for rolling the vehicle body at an angle equal to control tilt angle $\theta_C$ in the opposite direction to the tilt direction of the vehicle body) may cause unsettled laterally reciprocal rolling (hunting) of the vehicle body every rolling control, or result in that the vehicle body is tilted in the opposite to the original tilt direction because of excessive amendment, or that the rolled vehicle body attitude cannot reach the substantially level position because of insufficient amendment. When such a condition existents, preset tilt-amendment magnification k is changed (0<k<100).

In this way, even during turning travel of the combine, the rolling control can be accurately performed so as to keep the vehicle body attitude substantially parallel or at a set tilt angle with respect to the base level, thereby improving the travel stability during turning, and improving the reaction of rolling control in correspondence to inclination of a field after completion of the turning.

Especially, when the travel speed is small or the turning radius is large, the attitude-control of the vehicle body during turning (rolling control) tends to be busy (the attitude-control is excessively frequently performed). If the influence of centrifugal force on the tilt sensor during turning of the combine is supposed to be small, the threshold and the unamended detection value of tilt sensor 96 are used for the rolling control, thereby stabilizing the vehicle body attitude.

Referring to Figs. 7 and 13 to 18, description will now be given of how influence the fore-and-aft position of vehicle body tilt angle detection means 88 (in this embodiment, tilt sensor 96) with respect to combine 201 has on vehicle body tilt angle detection means 88 during turning of combine 201. The follow description depends upon the assumption that the settled position of tilt sensor 96 is shifted on a straight line passing center point 94 of the vehicle body (the turning center point of the vehicle body) in parallel to the fore-and-aft direction of the vehicle body, and that combine 201 turns left.

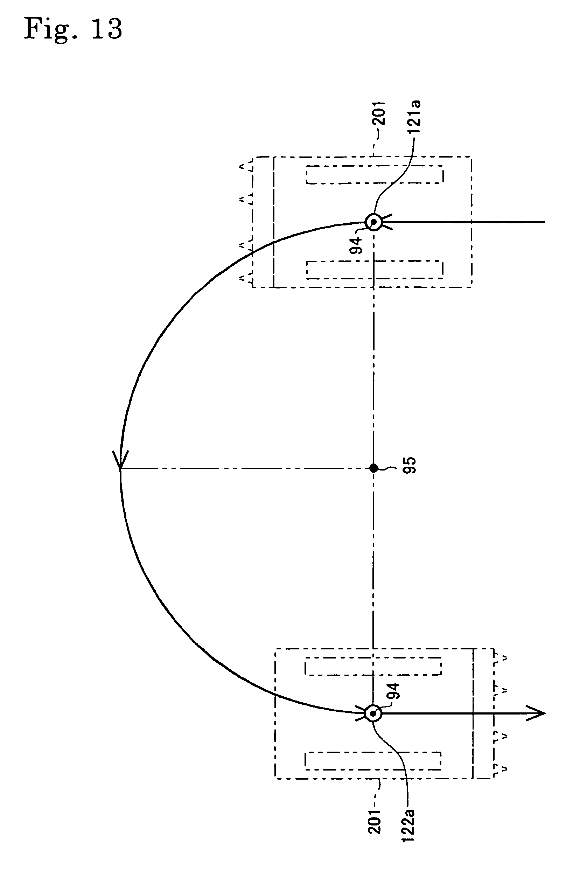

Referring to Fig. 13, when the settled position of tilt sensor 96 coincides with center point 94 of the vehicle body (the turning center point of the vehicle body), a locus of tilt sensor 96 during turning of the combine coincides with a locus of center point 94 of the vehicle body turning of the combine (drawn in a solid line in Fig. 13).

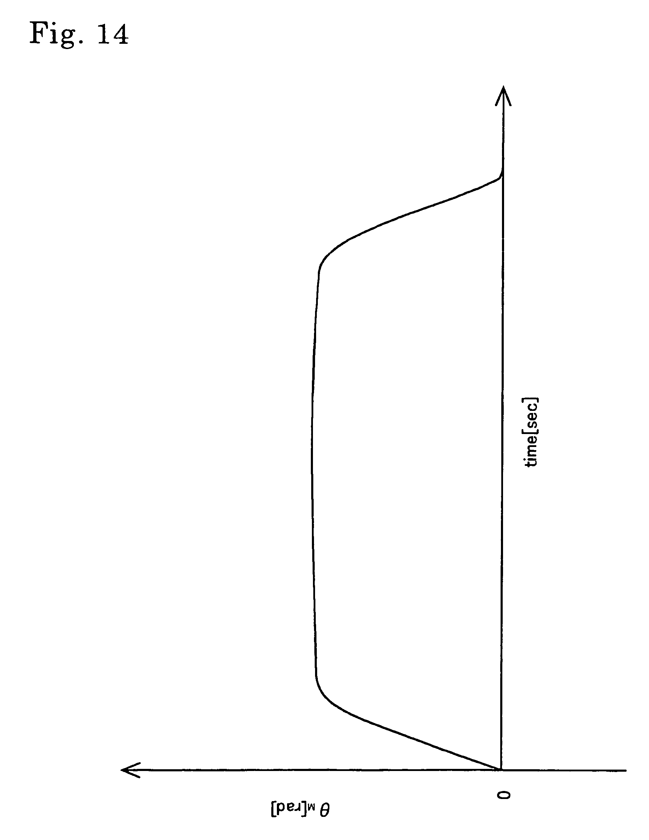

Therefore, detected tilt angle $\theta_M$, i.e., the detection value of tilt sensor 96 during the turning of the combine varies as graphed in Fig. 14. As noticed from the graph, the delay of control reaction caused by undershoot or overshoot of detected tilt angle $\theta_M$ is prevented when center point 94 of the vehicle body is disposed at a turning start point 121a and at a turning end point 122a.

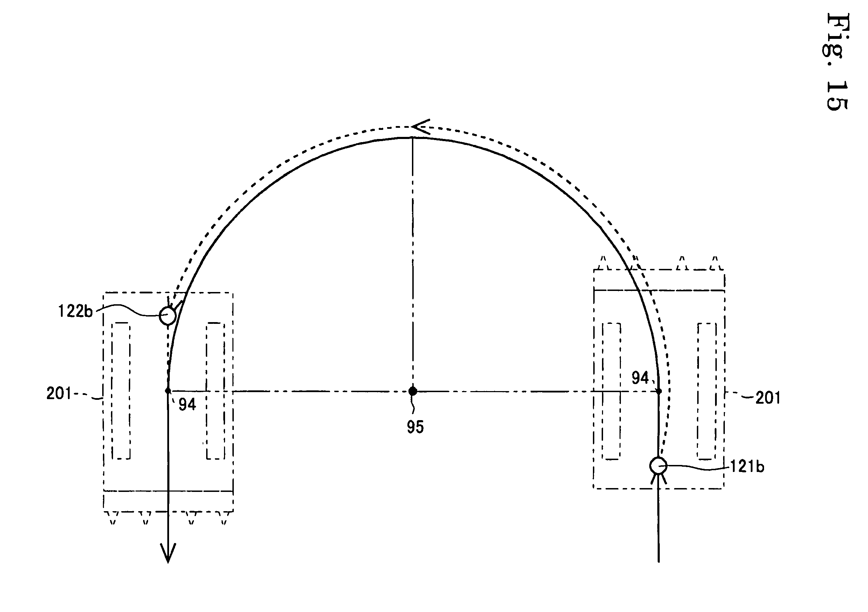

Referring to Fig. 15, the settled position of tilt sensor 96 is disposed rearward from center point 94 of the vehicle body (the turning center point of the vehicle body), a locus of tilt sensor 96 during turning of the combine (drawn in a dotted line in Fig. 15) does not coincide with the locus of center point 94 of the vehicle body turning of the combine (drawn in a solid line in Fig. 15). When center point 94 of the vehicle body reaches a turning start point 121b, tilt sensor 96 is suddenly turned rightward, so that an inertial force is generated leftward with respect to the vehicle body (opposite to the centrifugal force onto tilt sensor 96 during left turning of the combine). Also, when center point 94 of the vehicle body reaches a turning end point 122b, tilt sensor 96 is suddenly turned leftward, so that an inertial force is generated rightward with respect to the vehicle body (in the same direction as the centrifugal force onto tilt sensor 96 during left turning of the combine).

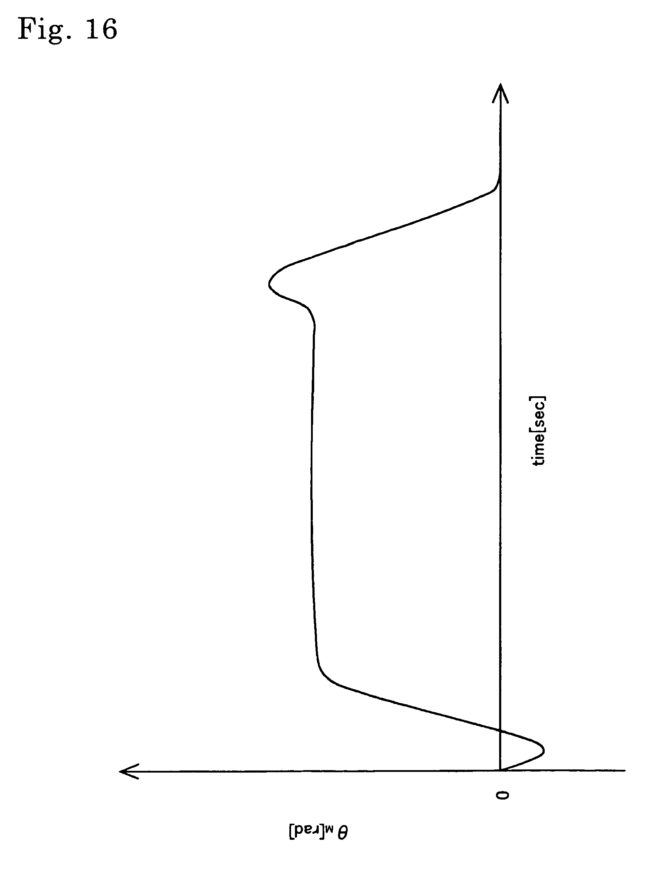

Therefore, detected tilt angle $\theta_M$, i.e., the detection value of tilt sensor 96 during the turning of the combine varies as graphed in Fig. 16. As noticed from the graph, the delay of control reaction is caused by undershoot of detected tilt angle $\theta_M$ when center point 94 of the vehicle body is disposed at turning start point 121b, and by overshot of detected tilt angle $\theta_M$ when center point 94 of the vehicle body is disposed at turning end point 122b.

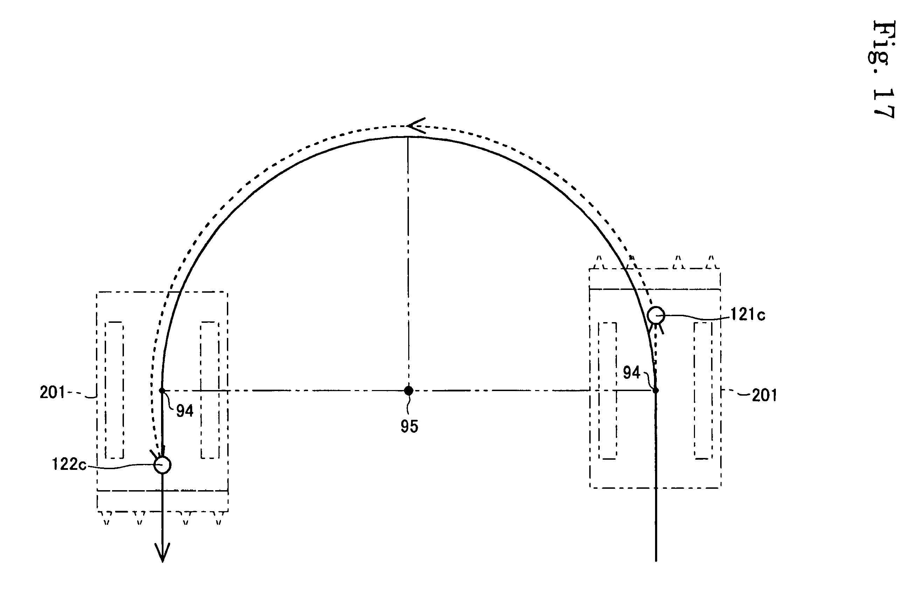

On the other hand, referring to Fig. 17, the settled position of tilt sensor 96 is disposed forward from center point 94 of the vehicle body (the turning center point of the vehicle body), a locus of tilt sensor 96 during turning of the combine (drawn in a dotted line in Fig. 17) does not coincide with the locus of center point 94 of the vehicle body turning of the combine (drawn in a solid line in Fig. 17). When center point 94 of the vehicle body reaches a turning start point 121c, tilt sensor 96 is suddenly turned leftward, so that an inertial force is generated rightward with respect to the vehicle body (in the same direction as the centrifugal force onto tilt sensor 96 during left turning of the combine). Also, when center point 94 of the vehicle body reaches a turning end point 122c, tilt sensor 96 is suddenly turned rightward, so that an inertial force is generated leftward with respect to the vehicle body (opposite to the centrifugal force onto tilt sensor 96 during left turning of the combine).

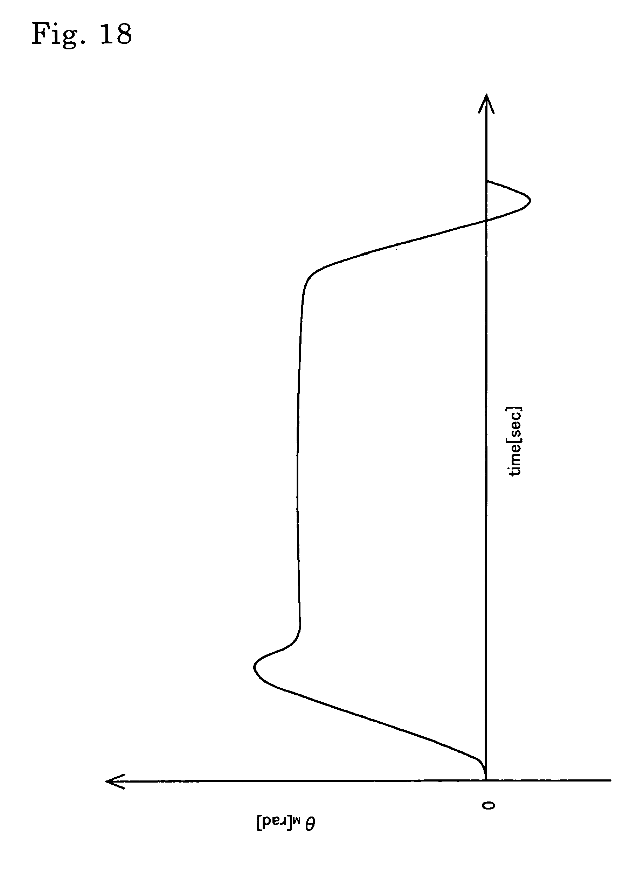

Therefore, detected tilt angle $\theta_M$, i.e., the detection value of tilt sensor 96 during the turning of the combine varies as graphed in Fig. 18. As noticed from the graph, when center point 94 of the vehicle body is disposed at turning start point 121c, detected tilt angle $\theta_M$ is overshot, however, does not delay the control reaction. Also, when center point 94 of the vehicle body is disposed at turning end point 12ec, detected tilt angle $\theta_M$ is undershot, however, does not delay the control reaction.

From the viewpoint of preventing the reaction delay of attitude-control of the vehicle body, tilt sensor 96 is desired to be disposed at a position, which coincides with center point 94 of the vehicle body (the turning center point of the vehicle body), and which is disposed forward from center point 94 of the vehicle body (the turning center point of the vehicle body). From the viewpoint of preventing undershoot and overshoot of detected tilt angle $\theta_M$ for improving the accuracy of attitude-control of the vehicle body, the settled point of tilt sensor 96 is desired to approach center point 94 of the vehicle body (the turning center point of the vehicle body).

Incidentally, with respect to the attitude-control of the vehicle body with tilt sensor 96 according to the present invention, the influence of swing (lateral rolling) of the vehicle body during turning travel of the combine onto tilt sensor 96 has to be reduced.

For example, a primary filter having 0.5Hz cutoff frequency and sampling cycle 10ms is provided for treating both the detection value of tilt sensor 96 (detected tilt angle $\theta_M$) and the calculated measurement deviation caused by the centrifugal force (tilt sensor amendment angle $\theta_E$), so that the influenced swing (lateral rolling) of the vehicle body during turning of the combine can be reduced so as to improve the accuracy of attitude-control of the vehicle body (rolling control). Any optimal cutoff frequency and any optimal sampling cycle may be selected in correspondence to a type of the vehicle body or a condition of the field.

Further, if an upper limit of absolute value of the calculated measurement deviation caused by the centrifugal force (tilt sensor amendment angle $\theta_E$) is determined and the absolute value becomes larger than the upper limit, the upper limit is desired to replace the absolute value of the measurement deviation. The reason is that, even if the vehicle body during turning of the combine tilts either leftward or rightward, a large change of the vehicle body attitude (attitude-control of the vehicle body by the rolling control) for a short time is sometimes undesirable from the viewpoint of ensuring traveling stability of the combine. For example, the upper limit of absolute value of the calculated measurement deviation caused by the centrifugal force (tilt sensor amendment angle $\theta_E$) is set to 10 degree. If the absolute value of the measurement deviation becomes larger than 10 degree, the upper limit 10 degree is used as the measurement deviation for the subsequent rolling control, thereby preventing the traveling stability of the combine from being reduced by sudden attitude change.

If the absolute value of the calculated measurement deviation caused by the centrifugal force (tilt sensor amendment angle $\theta_E$) is small (e.g., because the roughness of the field is small), $\theta$ may be nearly equal to $\tan \theta$, and tilt sensor amendment angle $\theta_E$ may be calculated based on the following Formula 9 replacing the above-mentioned Formula 7.

$$\text{Formula 9} \qquad \theta_E \fallingdotseq \tan \theta = F/G = (R+A)\omega^2/g$$

In this embodiment, description is given of the attitude-control under the condition that left and right crawlers 1L and 1R do not slip on the field. However, if some condition of the field exists, one or both of the left and right crawlers may slip on the field so as to cause the actual travel speed to be different from travel speeds $V_L$ and $V_R$ detected by left and right crawler speed detection means 92 and 93.

If the combine during turning left has slip of right crawler 1R, i.e., the turning-outside crawler, an actual right crawler speed $V_{RSLIP}$ during turning becomes smaller than travel speed $V_R$ detected by right crawler speed detection means 93.

At this time, "$\omega_{SLIP}$" is calculated by Formula 3 so that "$\omega_{SLIP} = (V_{RSLIP}-V_L)B< \omega$". "$R_{SLIP}$" is calculated by Formula 4 so that "$R_{SLIP} = (B/2) \{1+2V_L/(V_{RSLIP}-V_L)\}>R$". "$F_{SLIP}$" is calculated by Formula 6 so that "$F_{SLIP} = M(R_{SLIP}+A)\omega_{SLIP}^2 <F$". "$|\tan \theta_{E_{SLIP}}|$" is calculated by Formula 7 so that "$|\tan \theta_{E_{SLIP}}| = |F_{SLIP}/G|<|\tan \theta_E|$"

Namely, even if the vehicle body attitude is intended to be kept substantially parallel with respect to the base level, the absolute value of $\theta_E$ is supposed to be larger than the absolute value of $\theta_{ESLIP}$ because of the slip. As a result, the rolling-controlled vehicle body attitude is tilted inward (leftwardly downward during left turning).

Therefore, the combine is desirably provided with crawler slip detection means for detecting existence of slip. For example, the crawler slip detection means analyzes the relation of crawler rotary speed with engine load so as to judges whether or not the crawler slips against the ground surface. The crawler slip detection means detecting the slipping calculates a slip ratio (a ratio of the actual crawler travel to travel speed $V_R$ detected by right crawler speed detection means 93), amends the crawler travel speed during turning of the combine in correspondence to the slip ratio, and calculate $\theta_E$. Alternatively, the above-mentioned tilt amendment multiplication k[%] is previously set so that "0<k<100" so as to prevent excessive rolling control.

Due to the above configuration, even if the crawler (or crawlers) slips (or slip), excessive vehicle body attitude control is prevented so as to stabilize the attitude of the vehicle body during turning of the combine, thereby easily keeping the vehicle body attitude substantially parallel with respect to the base level at the time of completion of turning, so that the combine can start reaping cereals immediately after completion of turning.

**Industrial Applicability**

The combine of the present invention is used for the purpose of reaping cereals from a field, threshing and sorting the reaped cereals, and storing selected grains. The invention can be also applied to other vehicles each of which has to travel and turn with a vehicle body attitude kept substantially parallel to a horizontal surface.

**Claims**

1. A combine (201) comprising:

   left and right crawlers (IL, IR);
   vehicle body tilt angle detection means (88) for detecting a tilt angle of a vehicle body of the combine; and
   rolling drive means (91), to perform rolling control for controlling an attitude of the vehicle body substantially parallel or at a certain set tilt angle with respect to a base level,
   **characterized in that** the combine calculates a centrifugal force (F) applied onto the vehicle body based on travel speeds of the left and right crawlers (IL, IR) during turning thereof, and amends a detection value ($\theta_M$) of the vehicle body tilt angle detection means (88) deviated by the centrifugal force so as to perform the rolling control based on the amended value ($\theta_T$).

2. The combine according to claim 1, wherein the vehicle body tilt angle detection means (88) s disposed so as to substantially coincide with a turning center point (95) of the vehicle body in the fore-and-aft direction of the combine.

3. The combine according to claim 1, wherein the vehicle body tilt angle detection means is disposed (88) forward from the turning center point (95) of the vehicle body with respect to the vehicle body.

4. The combine according to any of claims 1 to 3, further comprising:

   crawler slip detection means, wherein the detection value of the vehicle body tilt angle detection means (88) is amended based on a detection value of the crawler slip detection means.

**Patentansprüche**

1. Mähdrescher (201), der aufweist:

   eine linke und eine rechte Laufkette (1L; 1R);
   eine Fahrzeugkörper-Neigungswinkel-Erfassungseinrichtung (88) zur Erfassung eines Neigungswinkels eines Fahrzeugkörpers des Mähdreschers; und
   eine Rollantriebseinrichtung (91), um eine Rollsteuerung zur Steuerung einer Stellung des Fahrzeugkörpers im Wesentlichen parallel oder in einem bestimmten eingestellten Neigungswinkel bezüglich einer Basislage auszuführen,
   **dadurch gekennzeichnet, dass** der Mähdrescher eine Zentrifugalkraft (F), die auf den Fahrzeugkörper aufgebracht wird, auf der Basis der Fortbewegungsgeschwindigkeiten der linken und der rechten Laufkette (1L, 1R) während des Abbiegens berechnet, und einen Erfassungswert ($\theta_M$) der Fahrzeugkörper-Neigungswinkel-Erfassungseinrichtung (88) verändert, der durch die Zentrifugalkraft einer Abweichung unterliegt, um die Rollsteuerung auf der Basis des veränderten Werts ($\theta_T$) auszuführen.

2. Mähdrescher gemäß Anspruch 1, bei welchem die Fahrzeugkörper-Neigungswinkel-Erfassungseinrichtung (88) derart angeordnet ist, dass sie im Wesentlichen mit einem Abbiegemittelpunkt (95) des Fahrzeugkörpers in der Längsrichtung des Mähdreschers übereinstimmt.

3. Mähdrescher gemäß Anspruch 1, bei welchem die Fahrzeugkörper-Neigungswinkel-Erfassungseinrichtung (88) vor dem Abbiegemittelpunkt (95) des Fahrzeugkörpers bezüglich des Fahrzeugkörpers angeordnet ist.

4. Mähdrescher gemäß einem der Ansprüche 1 bis 3, der ferner aufweist:

eine Laufkettenschlupf-Erfassungseinrichtung, bei welcher der Erfassungswert der Fahrzeugkörper-Neigungswinkel-Erfassungseinrichtung (88) auf der Basis eines Erfassungswerts der Laufkettenschlupf-Erfassungseinrichtung verändert wird.

## Revendications

1. Moissonneuse-batteuse (201) comprenant :

des rampes gauche et droite (1L, 1R) ;
des moyens de détection d'angle d'inclinaison de châssis de véhicule (88) pour détecter un angle d'inclinaison d'un châssis de véhicule de la moissonneuse-batteuse ; et
des moyens de commande de roulement (91) pour effectuer le contrôle de roulement pour contrôler une attitude du châssis de véhicule sensiblement parallèle ou à un certain angle réglé d'inclinaison par rapport à un niveau de base,
**caractérisée en ce que** la moissonneuse-batteuse calcule une force centrifuge (F) appliquée au châssis de véhicule sur la base des vitesses de déplacement des rampes gauche et droite (1L, 1R) pendant qu'elle tourne, et amende une valeur de détection ($\theta_M$) des moyens de détection d'angle d'inclinaison de châssis de véhicule (88) déviés par la force centrifuge de manière à effectuer le contrôle de roulement sur la base de la valeur amendée ($\theta_T$)

2. Moissonneuse-batteuse selon la revendication 1, dans laquelle les moyens de détection d'angle d'inclinaison de châssis de véhicule (88) sont disposés de manière à coïncider sensiblement avec un point central de braquage (95) du châssis de véhicule dans la direction longitudinale de la moissonneuse-batteuse.

3. Moissonneuse-batteuse selon la revendication 1, dans laquelle les moyens de détection d'angle d'inclinaison de châssis de véhicule (88) sont disposés à l'avant du point central de braquage (95) du châssis de véhicule par rapport au châssis de véhicule.

4. Moissonneuse-batteuse selon l'une quelconque des revendications 1 à 3, comprenant en outre :

des moyens de détection de glissement de rampe, dans lequel la valeur de détection des moyens de détection d'angle d'inclinaison de châssis de véhicule (88) est amendée sur la base d'une valeur de détection des moyens de détection de glissement de rampe.

# Fig. 1

# Fig. 2

Fig. 3

Fig. 4

# Fig. 5

Fig. 6

Fig. 7

Fig. 8

Fig. 9

Fig. 10

# Fig. 11

```
                    ┌─────────────┐
                    │    START    │
                    └──────┬──────┘
                           │
    ┌──────────────────────┤
    │                      ▼
    │        ┌──────────────────────────┐
S110│────────│  Detection of VL, VR     │
    │        └────────────┬─────────────┘
    │                     │
    │                     ▼
    │        ┌──────────────────────────┐
S120│────────│    Calculatoin of F      │
    │        └────────────┬─────────────┘
    │                     │
    │                     ▼
    │  S130              ╱╲
    │        ╱─────────────────────────╲      No
    │        ╲      F < Fcr ?           ╲─────────────────────┐
    │        ╲─────────────────────────╱                      │
    │                  ╲  ╱                                    │
    │                   ╲╱                                     ▼
    │                   │ Yes                    ┌──────────────────────────┐
    │                   │                 S140 ──│   Calculation of θ₁      │
    │                   │                        └────────────┬─────────────┘
    │  S700             │                                     │
    │        ◄──────────┼─────────────────────────────────────┘
    │        ┌──────────▼──────────────┐
    │        │ │  Rolling Control   │ │
    │        └──────────┬──────────────┘
    │                   │
    └───────────────────┘
```

# Fig. 12

## Fig. 13

# Fig. 14

$\theta_m$[rad]

time[sec]

0

# Fig. 15

# Fig. 16

Fig. 17

Fig. 18

time[sec]

$\theta_M$[rad]

0

**EP 1 607 316 B1**

**REFERENCES CITED IN THE DESCRIPTION**

**Patent documents cited in the description**

- JP 2002272243 A

- JP 2566454 A